Europäisches Patentamt

**European Patent Office**

**Office européen des brevets**

(19)

(11) Veröffentlichungsnummer: **0 080 996**

A2

(12) # EUROPÄISCHE PATENTANMELDUNG

(21) Anmeldenummer: 82890172.8

(22) Anmeldetag: 22.11.82

(51) Int. Cl.³: **C 22 B 3/00**
C 22 B 15/12, C 22 B 23/04
C 22 B 34/32

(30) Priorität: 02.12.81 AT 5180/81

(43) Veröffentlichungstag der Anmeldung:
08.06.83 Patentblatt 83/23

(84) Benannte Vertragsstaaten:
BE CH DE FR GB IT LI LU NL SE

(71) Anmelder: **VOEST-ALPINE Aktiengesellschaft**
**Friedrichstrasse 4**
**A-1011 Wien(AT)**

(72) Erfinder: **Hans, Walter**
**Burggasse 12**
**A-8652 Kindberg/Aumühl(AT)**

(72) Erfinder: **Lazar, Gerhard, Mag. Dr.**
**Leibnizstrasse 39**
**A-4020 Linz(AT)**

(72) Erfinder: **Mörth, Wolfgang**
**Kienbergweg 2**
**A 8707 Leoben(AT)**

(72) Erfinder: **Reiterer, Hans Detlef, Dr.**
**Sandgasse 47**
**A-8010 Graz(AT)**

(74) Vertreter: **Kretschmer, Adolf, Dipl.-Ing. et al,**
**Patentanwälte Dipl.Ing. A. Kretschmer Dr. Thomas M.**
**Haffner Schottengasse 3a**
**A-1014 Wien(AT)**

(54) **Verfahren zum Rückgewinnen von Metallen aus ihren sauren Salzlösungen.**

(57) Zum Rückgewinnen von Metallen aus ihren sauren Salzlösungen, insbesondere aus salzsauren, salpetersauren oder fluorwasserstoffsauren Lösungen wird nach einer Neutralisation zum Ausfällen der Metalle als Hydroxide so vorgegangen, daß die gebildeten Niederschläge nach dem Abtrennen mit verdünnter Lauge gereinigt werden. Durch die Reinigung mit verdünnter Lauge werden die in den Hydroxidniederschlägen mitgerissenen Anionen freigesetzt, so daß ein weitgehend von Anionen befreiter Niederschlag einer nachfolgenden elektrolytischen oder pyrometallurgischen Aufarbeitung zugeführt werden kann.

- 1 -

<u>Verfahren zum Rückgewinnen von Metallen aus ihren sauren Salzlösungen.</u>

Die Erfindung bezieht sich auf ein Verfahren zum Rückgewinnen von Metallen aus ihren sauren Salzlösungen, insbesondere aus salzsauren und/oder salpetersauren und/oder fluorwasserstoffsauren Lösungen, wie Beizsäuren und/oder Beizspülwässern, durch stufenweises Neutralisieren und selektives Ausfällen, insbesondere mit $CaCO_3$, gegebenenfalls unter Einleiten von Luft. Bei fluorwasserstoffsauren Lösungen hat die Verwendung von Kalziumkarbonat als Fällungsmittel den wesentlichen Vorteil, daß Kalziumfluorid bereits im stark sauren Milieu vor der Fällung von rückzugewinnenden Metallen als feinkristalliner Niederschlag ausfällt und daß somit das bei einer weiteren Metallgewinnung empfindlich störende Anion Fluorid gleich zu Beginn des Verfahrens entfernt wird. Der Kalziumfluoridniederschlag ist so fein kristallin, daß ein Mitreißen von rückzugewinnenden Metallen aus der Metallsalzlösung nicht zu befürchten ist.

Beim Beizen von Metallen mit verschiedenen Säuren, wie Salzsäure, Salpetersäure, Schwefelsäure, Fluorwasserstoffsäure usw., entstehen in den Beizlösungen die entsprechenden Metallsalze. Diese werden bei der Neutralisation mit Basen oder Erdalkalioxiden vorwiegend als Hydroxide ausgefällt. Aber auch ein Teil der noch unverbrauchten freien Säure und der Säurereste der Metallsalze werden, wie im Falle der Schwefelsäure, durch Calciumhydroxid als unlösliches Salz, wie z.B. Kalziumsulfat, aus der Lösung ausgefällt. Alle diese abgeschiedenen Stoffe werden dann durch entsprechende Kläreinrichtungen, Filteranlagen usw. von dem Abwasser abgetrennt. Das dem Vorfluter zugeführte Klarwasser muß im Interesse des Umweltschutzes weitgehend von den genannten Stoffen befreit sein. Der pH-Wert des Abwassers muß nahe dem neutralen Bereich liegen. Nur so kann eine schädliche Beeinflussung der Gewässer durch Beizabwässer weitgehend vermieden werden. Die von den Behörden erlassenen Vorschriften sind sehr streng und werden auf ihre Einhaltung dauernd überwacht. So dürfen nur einige Milligramm/l von Metallen, wie z. B. Eisen, im abgeleiteten Abwasser vorhanden sein.

Weitere Mengen von sauren Salzlösungen fallen beispielsweise in galvanischen Betrieben sowie beim Ätzen von Printplatten in der Elektronikindustrie an. Auch derartige Ätzlösungen müssen entsprechend aufgearbeitet werden, wobei vielfach eine Reihe von wertvollen Rohstoffen, wie beispielsweise Chrom, Kupfer und Nickel, verloren gehen. Bei dem Ausfällen der Hydroxidschlämme, insbesondere der basischen Hydroxide, werden mehr oder minder große Mengen von Anionen aus der jeweiligen Salzlösung adsorbiert oder komplex gebunden, wobei vor allen Dingen Chloride, Nitrate, Sulfate und Fluoride mit zweiwertigen Metallen basische Salze verschiedener stöchiometrischer Zusammensetzung bilden. Dreiwertige Metalle neigen bei ihrer Ausfällung dazu, Anionen zu adsorbieren. Derartige Anionen stören nun bei der Weiteraufarbeitung der Schlämme und es ist beispielsweise nicht möglich, basische Kupferchloride, die üblicherweise 10 bis 20 % Cl enthalten, einer schwefelsauren Kupferelektrolyse zu unterwerfen um metallisches Kupfer zurückzugewinnen, da bei diesem Vorgang beträchtliche Mengen von giftigem Chlorgas entstehen. Auch stören Chloride die pyrometallurgische Aufarbeitung von Kupfer, da flüchtiges Kupferchlorid entsteht.

Die Erfindung zielt nun darauf ab, bei dem eingangs genannten Verfahren nicht nur eine Abscheidung der Kationen sicherzustellen, welche nicht in den Vorfluter gelangen dürfen, sondern dieses Verfahren in einer Weise auszubilden, daß die Rückgewinnung der einzelnen Metalle auf einfache Weise möglich ist. Zur Lösung dieser Aufgabe besteht die Erfindung im wesentlichen darin, daß die bei der stufenweisen Neutralisation gebildeten Niederschläge abgetrennt werden und in

verdünnter Lauge, insbesondere verdünnter Natronlauge, gereinigt werden. Durch die Reinigung der Niederschläge mit verdünnter Natronlauge, vorzugsweise mit 5- bis 25%iger, insbesondere etwa 10%iger Natronlauge, werden störende Anionen aus den Niederschlägen verdrängt und adsorbierte Anionen freigesetzt. Hiebei ist es von wesentlicher Bedeutung, die Reinigung in verdünnter Lauge durchzuführen, da eine Reihe von Hydroxidniederschlägen bei hoher Basizität wieder zumindest teilweise in Lösung gehen. Die entsprechend gereinigten und neuerlich gefilterten Niederschläge sind weitgehend frei von Chloriden und Nitraten, so daß ohne weiteres elektrolytische oder pyrometallurgische Aufarbeitungsschritte angeschlossen werden können. Beim Vorliegen von Mehrstoffsystemen ist auf Grund der erwähnten fraktionierten Fällung eine hohe Reinheit der auf diese Weise gereinigten Niederschläge erzielbar. Hiezu wird vorzugsweise so vorgegangen, daß die Neutralisation, insbesondere mit $CaCO_3$ in körniger Form, stufenweise vorgenommen wird, daß die jeweils fraktionierend gefällten Niederschläge abgetrennt werden, daß erforderlichenfalls die Neutralisation nahe dem Neutralpunkt mit Lauge fortgesetzt wird und bei Erzielung von pH-Werten von über 7 beendet wird, wobei die gebildeten Niederschläge neuerlich abgetrennt werden, und daß die gebildeten Niederschlagsfraktionen gesondert in verdünnter Lauge, insbesondere verdünnter Natronlauge, gereinigt werden. Die Neutralisation und Fällung der basischen Hydroxysalze bzw. komplexen Salze, welche noch störende Anionen enthalten, kann prinzipiell durch Zugabe von Natronlauge, Kalkhydrat und/oder Soda, erzielt werden. In besonders vorteilhafter Weise wird jedoch Kalziumkarbonat in feinkörniger Form eingesetzt, wobei die relativ zu den genannten anderen Neutralisationsmitteln verringerte Neutralisationsgeschwindigkeit vor allem bei der fraktionierenden Fällung der einzelnen Metalle in Form ihrer basischen Salze bzw. komplexen Salze besonders vorteilhaft ist. Die wirtschaftlichen Vorteile einer Fällung mit Kalziumkarbonat sind in der AT-PS 348 947 bereits ausführlich beschrieben. Für die fraktionierende Fällung einzelner Metalle aus ihren sauren Salzlösungen kommt hiebei zusätzlich noch der Vorteil hiezu, daß die Ansteuerung bestimmter pH-Werte für die gewünschte fraktionierende Fällung wesentlich leichter durchgeführt werden kann. Die auf diese Weise mit Kalziumkarbonat gefällten Niederschlagsfraktionen fallen hiebei im Vergleich zu anderen Neutralisationsmitteln früher quantitativ aus, was auf die Ausbildung von basischen Hydroxidniederschlägen zurückgeführt wird, welche in der Regel ein geringeres Löslichkeitsprodukt aufweisen, als die reinen Hydroxidniederschläge der entsprechenden Metalle. Auf diese Weise ist es ohne weiteres möglich, Drei- bis Vier-Stoffsysteme quantitativ zu trennen, wobei die störenden Anionen in den Niederschlägen durch die Reinigung mit verdünnter Natronlauge entfernt werden können.

In besonders vorteilhafter Weise wird erfindungsgemäß so vorgegangen, daß feinkörniges $CaCO_3$ in einem ersten Verfahrensschritt in einer Menge zugesetzt wird, welche zur Fällung von störenden Anionen ($F^-$) ausreicht, und zur Erzielung eines pH-Wertes von 2,2 bis 3,8, vorzugsweise unter 3,5, auslangt, worauf der gebildete Niederschlag (Erdalkalifluorid, Eisenoxidhydrat) abgetrennt wird, daß anschließend für die getrennte Fällung von Chrom und Kupfer pH-Werte von unter 5 bzw. von unter 7 stufenweise angesteuert werden, worauf die jeweils gebildeten Niederschläge abgetrennt werden, und daß schließlich zur Fällung von Nickel ein pH-Wert von über 7,5, vorzugsweise unter 9, mit Natronlauge eingestellt wird.

Die zum Reinigen der Niederschläge verwendete Natronlauge kann hiebei vorzugsweise bis zur Abnahme der Konzentration an freier Lauge auf 0,5 Gew.% im Kreislauf geführt werden, wodurch sich eine besonders wirtschaftliche Verfahrensweise ergibt.

Für die fraktionierte Fällung mehrerer Komponenten eines Mehrstoffsystems wird erfindungsgemäß vorteilhafterweise so vorgegangen, daß Kalziumkarbonat in an sich bekannter Weise mit einer Korngröße von maximal 0,5, vorzugsweise maximal 0,25 mm, eingesetzt wird, wobei vorzugsweise das zur Neutralisation verwendete Kalziumkarbonat zu wenigstens 30 Gew.%, vorzugsweise wenigstens 50 Gew.%, eine Korngröße von unter 0,03 mm aufweist. Um ein Überschäumen bei der Neutralisation zu verhindern und die Ansteuerung bestimmter pH-Werte für die fraktionierende Fällung zu erleichtern, kann das Kalziumkarbonat zur Erzielung des jeweils für die fraktionierende Fällung erforderlichen pH-Wertes intermittierend zugegeben werden. In einfacher Weise wird die Zugabe des Kalziumkarbonats in Abhängigkeit von der pH-Wert-Änderung je Zeiteinheit gesteuert.

Die Erfindung wird nachfolgend an Hand eines Ausführungsbeispieles näher erläutert. Es wurde eine Absäurelösung der folgenden Zusammensetzung eingesetzt: Kupfer 100 g/l, freie Salzsäure 40 g/l, Chloride 207,7 g/l. Nach Verdünnung mit Wasser auf das doppelte Volumen wurden 160 g Kalziumkarbonat/l in Pulverform unter ständigem Rühren zugegeben. Nach etwa dreistündiger Reaktionszeit wurde ein pH-Wert von 7,2 erreicht und die Fällung des Kupfers war vollständig. Zum Abtrennen des Niederschlages wurde eine Filterpresse verwendet, in welcher die basischen Niederschläge zunächst mit Wasser unter einem Druck von 8 bis 10 bar gespült und anschließend bis auf einen Restwassergehalt von etwa 40 % gebracht wurden. Im ersten Filtrat waren 176 g Cl/l zu finden. Nach weiterer Waschung mit Wasser konnten 5,7 g Cl/l entfernt werden. Im Filterkuchen verblieb ein aliquoter Anteil von 26 g Cl/l. Der Filterkuchen wurde sodann mit der zweifachen Menge Wasser des Volumens des Filterkuchens aufgeschlämmt, gerührt und mit 10%iger Natronlauge versetzt und nochmals gepreßt. Im ablaufenden Filtrat konnte diese restliche Menge des Chlorides nachgewiesen werden. Der

- 6 -

Filterkuchen wurde sodann durch Elektrolyse und auch pyrometallurgisch zu metallischem Kupfer aufgearbeitet.

Patentansprüche

1. Verfahren zum Rückgewinnen von Metallen aus ihren sauren Salzlösungen, insbesondere aus salzsauren und/oder salpetersauren und/oder fluorwasserstoffsauren Lösungen wie Beizsäuren und/oder Beizspülwässern, durch stufenweises Neutralisieren und selektives Ausfällen, insbesondere mit $CaCO_3$, gegebenenfalls unter Einleiten von Luft, dadurch gekennzeichnet, daß die bei der Neutralisation gebildeten Niederschläge nach dem Abtrennen mit verdünnter Lauge, insbesondere verdünnter Natronlauge, versetzt werden.

2. Verfahren nach Anspruch 1, dadurch gekennzeichnet, daß die Neutralisation, insbesondere mit $CaCO_3$ in körniger Form, stufenweise vorgenommen wird, daß die jeweils fraktionierend gefällten Niederschläge abgetrennt werden, daß erforderlichenfalls die Neutralisation nahe dem Neutralpunkt mit Lauge fortgesetzt wird und bei Erzielung von pH-Werten von über 7 beendet wird, wobei die gebildeten Niederschläge neuerlich abgetrennt werden, und daß die gebildeten Niederschlagsfraktionen gesondert in verdünnter Lauge, insbesondere verdünnter Natronlauge, gereinigt werden.

3. Verfahren nach Anspruch 2, dadurch gekennzeichnet, daß feinkörniges $CaCO_3$ in einem ersten Verfahrensschritt in einer Menge zugesetzt wird, welche zur Erzielung eines pH-Wertes von 2,2 bis 3,8, vorzugsweise unter 3,5, ausreicht, worauf der gebildete eisenhältige Niederschlag abgetrennt wird, daß anschließend für die getrennte Fällung von Chrom und Kupfer pH-Werte von unter 5, bzw. von unter 7 stufenweise angesteuert werden, worauf die jeweils gebildeten Niederschläge abgetrennt werden, und daß schließlich zur Fällung von Nickel ein pH-Wert von über 7,5, vorzugsweise unter 9, mit Natronlauge eingestellt wird.

4. Verfahren nach Anspruch 1, 2 oder 3, dadurch gekennzeichnet, daß zum Reinigen der Niederschlagsfraktionen 5- bis 25%ige, insbesondere etwa 10%ige, NaOH verwendet wird.

5. Verfahren nach einem der Ansprüche 1 bis 4, dadurch gekennzeichnet, daß die zum Reinigen der Niederschläge verwendete Natronlauge vorzugsweise bis zur Abnahme der Konzentration an freier Lauge von 0,5 Gew.% im Kreislauf geführt wird.

6. Verfahren nach einem der Ansprüche 1 bis 5, dadurch gekennzeichnet, daß Kalziumkarbonat in an sich bekannter Weise mit einer Korngröße von maximal 0,5, vorzugsweise maximal 0,25 mm, eingesetzt wird.

7. Verfahren nach Anspruch 6, dadurch gekennzeichnet, daß das zur Neutralisation verwendete Kalziumkarbonat zu wenigstens 30 Gew.%, vorzugsweise wenigstens 50 Gew.%, eine Korngröße von unter 0,03 mm aufweist.

8. Verfahren nach einem der Ansprüche 1 bis 7, dadurch gekennzeichnet, daß das Kalziumkarbonat zur Erzielung des jeweils für die fraktionierende Fällung erforderlichen pH-Wertes intermittierend zugegeben wird.

9. Verfahren nach Anspruch 8, dadurch gekennzeichnet, daß die Zugabe des Kalziumkarbonat in Abhängigkeit von der pH-Wert- Änderung je Zeiteinheit gesteuert wird.